# EUROPEAN PATENT SPECIFICATION

(11) **EP 0 265 225 B1**
(45) Date of publication and mention of the grant of the patent: **26.01.1994**
(21) Application number: 87309251.4
(22) Date of filing: 20.10.1987
(51) Int. Cl.: C08G 18/48, C08G 18/64, C08G 65/28

(54) **Packaging foam polyurethane composition employing epoxy resin modified polyether polyols**
Verwendung von mit Epoxydharz modifizierten Polyäther-Polyolen zur Herstellung einer Polyurethanverpackungsschaumzusammensetzung
Composition de mousse d'emballage de polyuréthane en utilisant des polyols polyéther modifiés par une résine époxy

(30) Priority: 23.10.1986 US 922236
(43) Date of publication of application: 27.04.1988
(73) Proprietor: ARCO Chemical Technology, L.P., Greenville, Delaware 19807 (US)
(72) Inventor: Primeaux II, Duley J., Elgin Texas 78621 (US)
(74) Representative: Cropp, John Anthony David

(56) References cited:
- EP-A- 0 153 821
- US-A- 4 137 265
- US-A- 4 316 991

## Description

### BACKGROUND OF THE INVENTION

### 1. Field of the Invention

The invention relates to the formation of low density packaging polyurethane foam and more particularly to such foams obtained from compositions containing an epoxy resin modified polyether polyol.

### 2. Description of Publications in the Field

Open-celled, low density, i.e. having a density in the range 6.4 11.2 Kg/m³ (0.4 - 0.7 lbs/cu ft), packaging foams are widely used for the encapsulation or packaging of shock-sensitive objects. These foams are generally made by mixing two preformulated components, commonly called the A-component and the B-component. The A-component typically contains the isocyanate compound that must be reacted with the constituents of the B-component to form the packaging foam. The B-component contains the balance of the foam ingredients; namely, polyol, water, surfactant, fluorocarbon and amine catalyst. A typical B-component will contain 10 to 30 parts by weight (pbw) water, 15 to 40 pbw fluorocarbon and 100 pbw polyol, plus small quantities of catalyst and surfactant.

U.S. Patent 4,087,389 to Olin Corporation describes packaging foam compositions prepared from a reaction mixture characterised by high levels of water and an organic foaming agent, and a reaction mixture NCO/OH index of from about 30 to about 60. The composition employs a triol obtained by condensing one mole of glycerine first with propylene oxide, then with ethylene oxide. Canadian Patent 866,233 is another patent in this field that discloses how low density, open-celled polyurea foams may be made by reacting undistilled aromatic polyisocyanurates with water.

U.S. Patent 4,439,551 describes a packaging foam using as a component a polyol which is an aromatic polyester polyol made from dibasic acid waste streams and recycled polyethylene terephthalate.

Another type of polyisocyanurate foam employs a polyol blend using both amide diols and primary hydroxyl polyols to give a foam having a large reactive exotherm, making it particularly suited to the preparation of polyisocyanurate foam laminates, according to U.S. Patent 4,246,364.

According to the present invention there is provided a low density polyurethane packaging foam having a density of 6.4 - 11.2 Kg/m³ (0.4 - 0.7 lbs/cu ft) and obtained by reacting an organic polyisocyanate component and a polyol component in the presence of a suitable catalyst and blowing agent, characterised in that said polyol component comprises:
(i) epoxy-resin modified polyol obtained by the reaction of an initiator, one or more alkylene oxides and an epoxy resin in such a manner that the epoxy resin is added internally along the length of the polyol chain, and
(ii) a polyol, other than an epoxy-resin modified polyol wherein epoxy resin is added internally along the length of the polyol chain, and selected from polymer polyols having a lower molecular weight and higher functionality than the epoxy-resin modified polyol (i) and a hydroxyl number of 200 to 800,
and the epoxy-resin modified polyol (i) forms 30% to 60% by weight of the polyol component.

### DETAILED DESCRIPTION OF THE PREFERRED EMBODIMENTS

In the novel packaging foams of this invention, an epoxy resin modified polyether polyol (i) is blended with a polyether polyol (ii) which is of lower molecular weight and greater functionality. Other ingredients such as silicone surfactants, non-silicone surfactants, catalysts, water and a blowing agent are used in addition to a polyisocyanate.

Examples of epoxy resin modified polyether polyols which may be used as component (i) in the novel packaging foams of this invention are the polyols described in U.S. Patents 4,373,034 and 4,316,991 and these are the type of polyols used in the examples which follow. Since these polyols are already described in the above U.S. patents, only a summary will be used herein to describe them. Briefly, such polyols are made by reacting an initiator, one or more alkylene oxides and an epoxy resin in such a manner that the epoxy resin is added internally along the length of the polyol chain. Preferred are polyols falling within the scope of claim 8 of U.S. 4,316,991. The precise description of such a polyol is, "A modified polyol produced by the reaction of
(a) a triol initiator,
(b) one or more alkylene oxides, and
(c) an epoxy resin selected from the group of epoxy resins comprising the diglycidyl ether of Bisphenol A, epoxy novolak resins, and
   aliphatic epoxy resins such that the ratio of equivalents of hydroxyl functionality to equivalent of epoxy resin be at least 2 to 1, and in such a manner that the epoxy resin is added internally along the length of the polyol chain to give a modified polyol having a molecular weight in the range of about 2,000 to 7,000."

A preferred molecular weight for the modified polyol is about 5,500.

The packaging foams of this invention have been found to be made best by blending polyols as descried in the patents of the preceding paragraph with a higher functionality lower molecular weight polyol such as the nitrogen-containing polyols described in U. S. Patents 3,297,597 and 4,137,265. These polyols are prepared by reacting 2 to 3 moles of propylene oxide with one mole of the Mannich reaction product of a mole of phenol or nonylphenol with one or two moles of formaldehyde and diethanolamine. They may be epoxy resin modified, if desired.

Other polyether polyols useful here are those that are the reaction products of a polyfunctional active hydrogen initiator and alkoxides. The polyfunctional active hydrogen initiator most preferably has a functionality of up to 8. These polyether polyols have a hydroxyl number of 200 to 800.

A wide variety of initiators may be alkoxylated to form useful polyether polyols. Thus, for example, polyfunctional amines and alcohols of the following type may be alkoxylated: monoethanolamine, diethanolamine, triethanolamine, glycerine, sorbitol, sucrose and alphamethyl glucoside. The alkoxylation of these type initiators is set forth in U. S. Patents 2,948,757 and 3,000,963.

The amount of epoxy resin modified polyol (i) in the blend of polyols will depend on the final properties desired. It is within the skill of the art to select appropriate blends. However, foams can be made using about 30 to 60 percent of the epoxy resin modified polyol. A preferable amount is about 40 to 50 percent.

It is within the scope of the present invention to utilize an extraneously added inert blowing agent such as a gas or gas-producing material. For example, halogenated low-boiling hydrocarbons, such as trichloromonofluoromethane and methylene chloride or carbon dioxide, nitrogen, etc., may be used. The inert blowing agent reduces the amount of excess isocyanate and water that is required in preparing flexible urethane foam. For a rigid foam, the use of water is often avoided and the extraneous blowing agent is used exclusively. Selection of the proper blowing agent is well within the knowledge of those skilled in the art. See for example U. S. Patent 3,072,082. The polyol and polyol blends of this invention are quite compatible with fluorocarbon blowing agents. The amount of water may range from 20 to 30 parts by weight (pbw) per 100 pbw of polyol or polyol blend. It is further preferred that the proportion of fluorocarbon be 40 to 50 pbw based on 100 pbw of polyol blend.

The catalyst of this invention may be preferably a tertiary amine or a mixture of amine catalysts. Tertiary amines include trialkylamines (e.g. trimethylamine, triethylamine), heterocyclic amines, such as N-alkylmorpholines (e.g., N-methylmorpholine, N-ethylmorpholine, etc.), 1,4-dimethylpiperazine, triethylenediamine, etc., and aliphatic polyamines, such as N,N,N'N'-tetramethyl-1,3-butanediamine. Suitable commercial catalysts include THANCAT® DD, THANCAT DPA and THANCAT TD-33 catalysts, among others, made by Texaco Chemical Company, The preferred proportion of catalyst is 1.5 to 8.5 pbw per 100 pbw of the polyol blend components.

Conventional formulation ingredients are also employed such as, for example, foam stabilizers, also known as silicone oils or emulsifiers. The foam stabilizer may be an organic silane or siloxane. For example, compounds may be used having the formula:

RSi[O(R₂SiO)ₙ(oxyalkylene)ₘR]₃

wherein R is an alkyl group containing from 1 to 4 carbon atoms; n is an integer of from 4 to 8; m is an integer of from 20 to 40; and the oxyalkylene groups are derived from propylene oxide and ethylene oxide. See, for example, U. S. Patent 3,194,773.

The isocyanate used in the A-component may be any aromatic polyisocyanate. Typical aromatic polyisocyanates include m-phenylene diisocyanate, p-phenylene diisocyanate, polymethylene polyphenylisocyanate, 2,4-toluene diisocyanate, bitolylene diisocyanate, naphthalene-1,4-diisocyanate, xylylene-1,4-diisocyanate, xylylene-1,3-diisocyanate, bis(4-isocyanatophenyl)methane, bis(3-methyl-4-isocyanatophenyl) methane, and 4,4'diphenyl-propane diisocyanate.

Greatly preferred aromatic polyisocyanates used in the practice of the invention are methylene-bridged polyphenyl polyisocyanate mixtures which have a functionality of from about 2 to about 4. These latter isocyanate compounds are generally produced by the phosgenation of corresponding methylene bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in the literature and in many patents, for example, U. S. Patents 2,683,730; 2,950,263; 3,012,008; 3,344,162 and 3,362,979.

Most preferred methylene-bridged polyphenyl polyisocyanate mixtures used here contain about 20 to about 100 weight percent methylene diphenyldiisocyanate isomers, with the remainder being polymethylene polyphenyl polyisocyanates having higher functionalities and higher molecular weight. Typical of these are polyphenyl polyisocyanate mixtures containing about 20 to 100 weight percent methylene diphenyldiisocyanate isomers, of which 20 to about 95 weight percent thereof is the 4,4'-isomer with the remainder being polymethylene polyphenyl polyisocyanates of higher molecular weight and functionality that have an average functionality of from about 2.1 to about 3.5. Preferably, the functionality is about 2.7. These isocyanate mixtures are known, commercially available materials and can be prepared by the process described in U. S. Patent 3,362,979, issued January 9, 1968 to Floyd E. Bentley.

The polyurethane packaging foams prepared here can be made in one step by reacting all the ingredients together at once (one-shot process) or the foams can be made by the so-called "quasi-prepolymer method." In accordance with this method, a portion of the polyol component is reacted in the absence of a catalyst with the polyisocyanate component in proportion so as to provide from about 20 percent to about 40 percent of free isocyanato groups in the reaction product, based on the polyol. To prepare foam, the remaining portion of the polyol is added and the two components are allowed to react in the presence of a catalyst and other appropriate additives such as blowing agents, foam stabilizing agents, fire retardants, etc. The blowing agent, the foam stabilizing agent, etc., may be added to either the prepolymer or remaining polyol, or both, prior to the mixing of the component, whereby at the end of the reaction a polyurethane foam is provided. The foregoing methods are known to those skilled in the art, as evidenced by the following publication: DuPont Foam Bulletin, "Evaluation of Some Polyols in One-Shot Resilient Foams", March 22, 1960. Other methods for making a suitable packaging foam are described in U. S. Patent 4,087,389.

The low-density, open-celled packaging foams of this invention should have a density of 6.4 to 11.2 Kg/m³ (0.4 to 0.7 pounds per cubic foot (pcf)). These foams can be prepared at temperatures ranging from 25 to 60°C.

The invention will be illustrated further with respect to the following specific examples, which are given by way of illustration and not given as limitations on the scope of this invention.

The following examples describe foam prepared by combining a previously prepared B-component with an isocyanate to yield a foam primarily used in packaging of parts and equipment. The B-component is composed of rigid polyol, a flexible polyol, silicone and non-silicone surfactants, water, catalyst and fluorocarbon. The flexible polyol used is a high molecular weight product (having propylene oxide and ethylene oxide reacted with an initiator) which imparts flowability and flexibility to a foam. Examples 1 and 2 illustrate packaging foams according to the prior art prepared with THANOL SF-5505 and other 5500 molecular weight polyols and some 6500 molecular weight polyols. The comparison between THANOL SF-5505 and other 5500 molecular weight polyols established that the THANOL SF-5505 outperformed these other polyols.

In Examples 3 and 4, formulations based on THANOL SF-5505 and THANOL SF-6509, a 6500 molecular weight polyol were compared with corresponding formulations using instead THANOL SF-5507 which is an epoxy modified polyol in accordance with the invention. This comparison used the optimum formulations for each polyol. From this evaluation in a step-mold*, it was found that the THANOL SF-5507 performed better than THANOL SF-5505, which was better than THANOL SF-6509. The THANOL SF-5507 foam gave better flowability, less shearing, better firmness and a better feeling foam than the THANOL SF-5505 foam and also the THANOL SF-6509 foam. The epoxy modified polyol, THANOL SF-5507, yields superior packaging foams giving better flowability, minimal shearing, better cell structure, and tougher packaging foams.
*A mold which increases in size from the injection end using steps to create a flowability test.

### EXAMPLE 1 (Comparative)

### Packaging Foam Systems Using THANOL® SF-5505

In this example, a packaging foam system, employing the best system based on polyols other than Texaco products was compared with our basic system based on THANOL R-470-X/THANOL SF-5505. The formulations are set out in Table 1. The system B performs better than A. For evaluation of these systems, a step-mold was used to observe cell structure and the flowability of the system (shearing).

### EXAMPLE 2 (comparative)

This example illustrates the use of various rigid polyols, THANOL R-470-X, THANOL R-354-X and THANOL R-575, with THANOL SF-5505. The best combination is THANOL R-470-X/THANOL SF-5505 followed by the THANOL R-575/THANOL SF-5505 combination. See Tables 2 and 3.

**TABLE 1**

| | A | B |
|---|---|---|
| MULTRANOL® E-6501 | 10.2 | - |
| MULTRANOL E-3901 | 9.0 | - |
| THANOL® SF-5505 | - | 13.55 |
| THANOL R-470-X | 10.68 | 16.55 |
| L-540 | 0.68 | - |
| SIL-WET® L-711 | - | 0.5 |
| SURFONIC® N-120 | 3.02 | 5.5 |
| THANCAT® DPA | 2.03 | 1.5 |
| Water | 8.94 | 8.0 |
| FREON® R-11A | 15.5 | 11.7 |
| RUBINATE® M | 65.4 | 61.5 |
| Index | ∼0.5 | ∼0.5 |

Column B gave an improvement over Column A. The shearing was worse in Column A than in Column B but both had the same cell structure.

**TABLE 2**

| Packaging Foam Systems* Other THANOL® Rigid Polyols | | | | |
|---|---|---|---|---|
| | A | B | C | D |
| THANOL® R-354-X | 15.57 | 15.06 | 9.04 | 15.06 |
| THANOL R-470-X | - | - | 6.02 | - |
| THANOL SF-5505 | 12.74 | 14.24 | 14.24 | 14.24 |
| SURFONIC® N-120 | 5.5 | 8 | 8 | 20 |
| Water | 8 | 8 | 8 | 8 |
| SIL-WET® L-711 | 0.5 | 0.5 | 0.5 | 0.5 |
| THANCAT® DPA | 1.5 | 1.5 | 1.5 | 1.5 |
| FREON® R-11A | 11.7 | 11.7 | 11.7 | 11.7 |
| Isocyanate (Functionality = 2.7) | 68.0 | 64.2 | 64.2 | 68.0 |
| Index | 0.5 | 0.5 | 0.5 | 0.5 |
| Column A = shearing and large cells. Column B = very slight shearing, good foam. Column C = shearing. Column D = good foam, better than Example 2. | | | | |

| | | | | |
|---|---|---|---|---|
| *All of these systems (B-components) were cloudy with the exception of Column D. | | | | |

**Table 3**

| Packaging Foam Systems (Continued from Table 2) | | | |
|---|---|---|---|
| | A | B | C |
| THANOL® R-575 | 17.88 | - | - |
| THANOL R-354-X | - | 15.13 | - |
| THANOL R-470-X | - | - | 19.25 |
| THANOL SF-5505 | 14.62 | 12.37 | 15.75 |
| SURFONIC® N-120 | 10 | 15 | 7.5 |
| Water | 8.0 | 8.0 | 8.0 |
| SIL-WET® L-711 | 0.5 | 0.5 | 0.5 |
| THANCAT® DPA | 2.0 | 2.0 | 2.0 |
| FREON® R-11A | 12 | 12 | 12 |
| RUBINATE® M | 65.0 | 65.0 | 65.0 |
| Index | 0.45 | 0.45 | 0.45 |

The THANOL R-470-X/THANOL SF-5505 system performed better than the other systems. The THANOL R-575/THANOL SF-5505 was almost as good.

### EXAMPLE 3

The use of THANOL® SF-5507 is shown in Table 4 in packaging foam systems with the intent of improving flowability. The formulations of Columns A and B performed better than or as well as Column C, in which the ratio of THANOL R-575 to THANOL SF-5507 was changed. Each of these systems outperformed the corresponding THANOL SF-5505 system in respect to flowability.

### EXAMPLE 4

This is a direct comparison of the best packaging foam systems with THANOL SF-5505, THANOL SF-5507 or THANOL SF-6509. Results (Table 5) showed that the system based on THANOL SF-5507 performed better than the other two, giving improved flowability and better cell structure.

**Table 4**

| Packaging Foam Systems | | | | |
|---|---|---|---|---|
| | A | B | C | D (comparative) |
| THANOL® R-575 | 15.06 | 15.06 | 18.0 | 15.06 |
| THANOL SF-5507 | 14.24 | 14.24- | 11.0 | - |
| THANOL SF-5505 | - | - | - | 14.24 |
| SURFONIC® N-120 | 8.0 | 15.0 | 15.0 | 8.0 |
| water | 8.0 | 8.0 | 8.0 | 8.0 |
| SIL-WET® L-711 | 0.5 | 0.5 | 0.5 | 0.5 |
| THANCAT® DPA | 1.5 | 1.5 | 1.5 | 1.5 |
| FREON® R-11A | 11.7 | 11.7 | 11.7 | 11.7 |
| RUBINATE® M | 66.6 | 59.4 | 55.0 | 66.6 |
| Index | 0.6 | 0.6 | 0.6 | 0.6 |

Column B performed better than the other systems. No shrinkage and slight foam shearing.

**TABLE 5**

| Packaging Foam Systems | | | |
|---|---|---|---|
| | A (comparative) | B | C (comparative) |
| THANOL® R-470-X | 16.75 | 16.75 | 16.75 |
| THANOL SF-5505 | 13.25 | - | - |
| THANOL SF-5507 | - | 13.25 | - |
| THANOL SF-6509 | - | - | 13.25 |
| SURFONIC® N-40 | 10.0 | 10.0 | 10.0 |
| Water | 8.0 | 8.0 | 8.0 |
| SIL-WET® L-711 | 0.7 | 0.7 | 0.7 |
| THANCAT® DPA | 2.0 | 2.0 | 2.0 |
| FREON® R-11A | 12 | 12 | 12 |
| RUBINATE® M | 63.0 | 63.0 | 63.0 |
| Index | 0.48 | 0.48 | 0.5 |
| Overall Comparison - All systems were very good, giving little to no shrinkage and no shearing. Column B did perform better than the other two. | | | |

### GLOSSARY

MUTRANOL® E-6501 - A low molecular weight, low viscosity, high reactivity polyol from Mobay Chemical Corp.
MUTRANOL E-3901 - A 6000 molecular weight, high reactivity polyol from Mobay Chemical Corp.
THANOL® R-354-X - A low molecular weight aromatic amino-polyol from Texaco Chemical Co.
THANOL R-470-X - A low molecular weight aromatic amino-polyol with infinite fluorocarbon solubility from Texas Chemical Co.
THANOL R-575 - A low molecular weight sucrose initiated polyether polyol from Texaco Chemical Co.
THANOL R-650-X - A low molecular weight aromatic amino-polyol with infinite fluorocarbon solubility from Texas Chemical Co.
THANOL SF-5505 - A 5500 molecular weight high reactivity polyol containing propylene oxide with an ethylene oxide cap from Texaco Chemical Co.
THANOL SF-5507 - A 5500 molecular weight, high reactivity, epoxy resin modified polyol from Texaco Chemical Co.
THANOL SF-6509 - A 6500 molecular weight high reactivity polyol containing propylene oxide with an ethylene oxide cap from Texaco Chemical Co.
L-540 - Silicon surfactant from Union Carbide.
SIL-WET® L-711 - Silicon surfactant from Union Carbide, also known as L-6202.
SURFONIC® N-120 - Ethoxylated nonylphenol surfactant from Texaco Chemical Co.
THANCAT® DPA - Hydroxyl containing tertiary amine catalyst from Texaco Chemical Co.
FREON® R-11A - Trichlorofluoromethane with 0.3 wt.% alphamethyl styrene from E. I. duPont de Nemours & Company.
RUBINATE® M - Polymeric methylene diphenyl diisocyanate from Rubicon Chemicals (2.7 functionality).

## Claims

1. A low density polyurethane packaging foam having a density of 6.4 - 11.2 Kg/m³ (0.4 - 0.7 lbs/cu ft) and obtained by reacting an organic polyisocyanate component and a polyol component in the presence of a suitable catalyst and blowing agent, characterised in that said polyol component comprises:
(i) epoxy-resin modified polyol obtained by the reaction of an initiator, one or more alkylene oxides and an epoxy resin in such a manner that the epoxy resin is added internally along the length of the polyol chain, and
(ii) a polyol, other than an epoxy-resin modified polyol wherein
epoxy resin is added internally along the length of the polyol chain, and selected from polymer polyols having a lower molecular weight and higher functionality than the epoxy-resin modified polyol (i) and a hydroxyl number of 200 to 800,
and the epoxy-resin modified polyol (i) forms 30% to 60% by weight of the polyol component.

2. A polyurethane packaging foam as claimed in claim 1 wherein said epoxy-resin modified polyol (i) has a molecular weight in the range of 2,000 to 7,000 and is derived from
(a) a triol initiator
(b) one or more alkylene oxides, and
(c) an epoxy resin selected from the group of epoxy resins comprising the diglycidyl ether of Bisphenol A, epoxy novolak resin and aliphatic epoxy resins wherein the ratio of equivalents of hydroxy functionality to equivalent of epoxy resin is at least 2 to 1.

3. A polyurethane packaging foam as claimed in claim 2 wherein said epoxy-resin modified polyol has a molecular weight of 5,500.

4. A polyurethane packaging foam as claimed in any one of claims 1 to 3 wherein component (ii) is derived from a polyfunctional active hydrogen initiator having a functionality of up to 8.

5. A polyurethane packaging foam as claimed in any one of claims 1 to 4 in which said polyol (ii) comprises polyol made by reacting two to three moles of propylene oxide with one mole of the Mannich reaction product of a mole of phenol or nonylphenol with one or two moles of formaldehyde and diethanolamine.

6. A polyurethane packaging foam as claimed in any one of claims 1 to 5 wherein the polyisocyanate and polyol components are reacted in the presence of 20 to 30 parts of water and 40 to 50 parts by weight of fluorocarbon per 100 parts of polyol component, by weight.

## Patentansprüche

1. Verpackungsschaum aus Polyurethan niedriger Dichte mit einer Dichte von 6,4 bis 11,2 kg/m³ (0,4 - 0,7 lbs/cu ft), den man durch Reaktion einer organischen Polyisocyanatkomponente und einer Polyolkomponente in Gegenwart eines geeigneten Katalysators und eines Treibmittels erhält, dadurch gekennzeichnet, daß die Polyolkomponente
i) mit Epoxidharz modifiziertes Polyol, das durch Reaktion eines Initiators, eines oder mehrerer Alkylenoxide und eines Expoxidharzes auf die Weise erhalten wird, daß sich das Epoxidharz innen entlang der Polyolkette anlagert, und
ii) ein anderes Polyol als das mit Epoxidharz modifizierte Polyol umfaßt, bei dem das Epoxidharz innen entlang der Polyolkette angelagert wird und das aus Polymerpolyolen mit einem niedrigeren Molekulargewicht und einer höheren Funktionalität als das mit Epoxidharz modifizierte Polyol (i) sowie einer Hydroxylzahl von 200 bis 800 ausgewählt ist,
wobei das mit Epoxidharz modifizierte Polyol (i) 30 bis 60 Gew.% der Polyolkomponente ausmacht.

2. Verpackungsschaum aus Polyurethan nach Anspruch 1, in dem das mit Epoxidharz modifizierte Polyol (i) ein Molekulargewicht im Bereich von 2.000 bis 7.000 aufweist und aus
a) einem Triolinitiator
b) einem oder mehreren Alkylenoxiden und
c) einem Epoxidharz abgeleitet ist, das ausgewählt ist aus der Gruppe von Epoxidharzen, die den Diglycidylether von Bisphenol A, Epoxidnovolak-Harz und aliphatische Epoxidharze umfassen, in denen das Verhältnis der Äquivalente der Hydroxyfunktionalität zum Äquivalent des Epoxidharzes mindestens 2 zu 1 beträgt.

3. Verpackungsschaum aus Polyurethan nach Anspruch 2, in dem das mit Epoxidharz modifizierte Polyol ein Molekulargewicht von 5.500 aufweist.

4. Verpackungsschaum aus Polyurethan nach einem der Ansprüche 1 bis 3, in dem die Komponente (ii) aus einem polyfunktionellen aktiven Wasserstoffinitiator mit einer Funktionalität von bis zu 8 abgeleitet ist.

5. Verpackungsschaum aus Polyurethan nach einem der Ansprüche 1 bis 4, in dem das Polyol (ii) Polyol umfaßt, daß durch die Reaktion von zwei bis drei Mol Propylenoxid mit einem Mol des Mannich-Reaktionsprodukts aus einem Mol Phenol- oder Nonylphenol mit einem oder zwei Mol Formaldehyd und Diethanolamin hergestellt wird.

6. Verpackungsschaum aus Polyurethan nach einem der Ansprüche 1 bis 5, in dem die Polyisocyanat- und Polyolkomponenten in Gegenwart von 20 bis 30 Teilen Wasser und 40 bis 50 Gewichtsteilen Fluorkohlenstoff auf 100 Gewichtsteile Polyolkomponente zur Umsetzung gebracht werden.

## Revendications

1. Mousse d'emballage en polyuréthane de faible densité, ayant une densité de 6,4 à 11,2 kg/m³ (0,4 à 0,7 livres par pied cubique) et obtenue en faisant réagir un composant polyisocyanate organique avec un composant polyol en présence d'un catalyseur approprié et d'un agent gonflant, caractérisée en ce que ledit composant polyol comprend :
(i) un polyol modifié par une résine époxy, obtenu grâce à la réaction d'un initiateur, un ou plusieurs oxydes d'alkylène et une résine époxy, de manière telle que la résine époxy est ajoutée à l'intérieur, sur la longueur de la chaîne du polyol, et
(ii) un polyol différent d'un polyol modifié par une résine époxy,
la résine époxy étant ajoutée à l'intérieur, sur la longueur de la chaîne du polyol, et choisi parmi des polyols polymères ayant un poids moléculaire inférieur et une fonctionnalité supérieure au polyol (i) modifié par une résine époxy et un indice d'hydroxyle de 200 à 800,
et le polyol (i) modifié par une résine époxy constitue de 30 à 60 % en poids du composant polyol.

2. Mousse d'emballage en polyuréthane selon la revendication 1, dans laquelle ledit polyol (i) modifié par une résine époxy a un poids moléculaire compris entre 2 000 et 7 000 et provient :
(a) d'un initiateur triol,
(b) d'un ou plusieurs oxydes d'alkylène, et
(c) d'une résine époxy choisie dans le groupe formé de résines époxy comprenant l'éther diglycicylique de bisphénol A, une résine époxy novolaque et des résines époxy aliphatiques, le rapport des équivalents de fonctionnalité hydroxy à l'équivalent de résine époxy étant d'au moins 2 pour 1.

3. Mousse d'emballage en polyuréthane selon la revendication 2, dans laquelle ledit polyol modifié par une résine époxy a un poids moléculaire de 5 500.

4. Mousse d'emballage en polyuréthane selon une quelconque des revendications 1 à 3, dans laquelle le composant (ii) provient d'un initiateur d'hydrogène actif polyfonctionnel ayant une fonctionnalité allant jusqu'à 8.

5. Mousse d'emballage en polyuréthane selon une quelconque des revendications 1 à 4, dans laquelle ledit polyol (ii) comprend un polyol obtenu grâce à la réaction de deux à trois moles d'oxyde de propylène avec une mole du produit de réaction de Mannich d'une mole de phénol ou de nonylphénol avec une ou deux moles de formaldéhyde et de diéthanolamine.

6. Mousse d'emballage en polyuréthane selon une quelconque des revendications 1 à 5, dans laquelle les composants polyisocyanate et polyol sont mis en réaction en présence de 20 à 30 parties en poids d'eau et 40 à 50 parties en poids de fluorocarbone pour 100 parties en poids de composant polyol.
